# EUROPEAN PATENT SPECIFICATION

(11) **EP 2 632 757 B1**
(45) Date of publication and mention of the grant of the patent: **22.10.2014**
(21) Application number: 11767925.8
(22) Date of filing: 01.10.2011
(51) Int. Cl.: B60K 15/035, B60K 15/04

(54) **FUEL TANK FOR MOTOR VEHICLES**
KRAFTSTOFFTANK FÜR KRAFTFAHRZEUGE
RÉSERVOIR DE CARBURANT POUR VÉHICULES À MOTEUR

(30) Priority: 28.10.2010 DE 102010049644
(43) Date of publication of application: 04.09.2013
(73) Proprietor: Kautex Textron GmbH & Co. KG, 53229 Bonn (DE)
(72) Inventor: KOUKAN, Ibrahim, 50999 Köln (DE)
(74) Representative: Kierdorf Ritschel
(86) International application number: PCT/EP2011/004911
(87) International publication number: WO 2012/055474

(56) References cited:
- EP-A1- 1 332 906
- EP-A2- 0 792 767
- WO-A1-2006/045839
- GB-A- 2 396 152
- US-A- 5 630 445

## Description

The invention relates to a fuel tank for motor vehicles comprising a venting line which communicates with the atmosphere via at least one fuel vapour filter, comprising at least one filler pipe and comprising at least one recirculation path for recirculating fuel vapours during refuelling, via which the venting line is connected to the filler pipe upstream of the fuel vapour filter in the direction of flow, at least one reducing member being provided in the recirculation line for altering the flow cross section depending on the refuelling volumetric flow.

Such a fuel tank is disclosed, for example, in DE 102 38 234 A1.

When refuelling a motor vehicle, the fuel flowing into the fuel tank displaces the gas volume which is located in the fuel tank and which flows at the same rate as the fuel. In this case, the gas present in the fuel tank is either discharged clean to the atmosphere via the venting system of the fuel tank and via a fuel vapour filter or drawn off in the region of the filling neck of the filler pipe of the fuel tank via the dispensing nozzle (European system).

In particular, when the gas volume present in the fuel tank is discharged clean to the atmosphere via the fuel vapour filter, due to the limited capacity of the fuel vapour filter which is configured as an activated charcoal filter, care has to be taken that the fuel vapour filter is not excessively loaded with hydrocarbons contained in the volumetric flow of gas. As a result of the fuel which flows during refuelling into the filler pipe of the fuel tank, and due to the Venturi effect/suction jet effect which occurs here, considerable quantities of fresh air are drawn into the fuel tank which ultimately result in considerable quantities of liquid fuel being converted to the gas phase.

For this reason, by utilizing the suction jet effect which occurs during refuelling through the volumetric flow of fuel flowing into the filler pipe, a recirculation volumetric flow is set up between the fuel tank and the filling neck, and which ideally corresponds to the volumetric flow of fuel during refuelling. This should ensure that a sufficient recirculation volumetric flow is produced, even with a high volumetric flow of fuel. Generally, refuelling volumetric flows fluctuate approximately between 15 l/min and 40 l/min.

DE 102 38 234 discloses a fuel tank for a motor vehicle comprising a venting line which communicates with the atmosphere via at least one fuel vapour filter, the venting line being attached to a recirculation line in the direction of flow of the venting volumetric flow upstream of the fuel vapour filter, and which is connected to the filler pipe below an opening cross section of the filling neck reduced to the diameter of a dispensing nozzle. Thus, during refuelling the recirculation line is subjected to a vacuum by the suction jet effect, so that a recirculation volumetric flow is set up.

In order to permit an adaptation of the recirculation volumetric flow to the refuelling volumetric flow, in the venting line/recirculation line a reducing member in the form of a needle valve is provided which may be adapted to the refuelling volumetric flow, and which is completely closed in the unloaded state. Said reducing member is configured as a float valve which is dependent on the filling state, in order to prevent liquid fuel from entering into the venting line.

This hitherto known solution is relatively costly and requires a bulky valve housing in the recirculation line. As the needle valve is held in a spring-loaded manner in the closed position, said needle valve has a certain response delay which is not desirable, in particular in the event of low refuelling volumetric flows.

The object of the invention, therefore, is to improve a fuel tank of the aforementioned type, so that an adaptation of the recirculation volumetric flow to the refuelling volumetric flow is possible by the simplest means.

The object of the invention is firstly achieved by a fuel tank for motor vehicles comprising a venting line which communicates with the atmosphere via at least one fuel vapour filter, comprising at least one filler pipe and comprising at least one recirculation path for recirculating fuel vapours during refuelling, via which the venting line is connected to the filler pipe upstream of the fuel vapour filter in the direction of flow, at least one reducing member being provided in the recirculation path for altering the flow cross section depending on the refuelling volumetric flow, the fuel tank being characterized in that the reducing member is configured as a valve body which is freely movably mounted in the recirculation path and which is movable without actuating elements between at least one first position with a reduced cross section of the recirculation path and a second position with an enlarged cross section of the recirculation path.

In other words, the reducing member according to the invention is of very simple configuration, and as a whole dispenses with actuation elements and with resilient elements and, therefore, may be designed in a simple and space-saving manner. Such a solution may be implemented in a particularly cost-effective manner.

Within the meaning of the invention, an individual/separate recirculation line may be provided as the recirculation path, or alternatively a recirculation bore/recirculation opening of a refuelling venting line may be provided in the filler pipe.

Preferably, a recirculation line is provided which is open in every position of the valve body so that, in particular with a low refuelling volumetric flow, no inertial forces have to be overcome and a recirculation volumetric flow is set up instantaneously i.e. without delay.

With the solutions according to the prior art, in particular according to DE 102 38 234 Al, it is not guaranteed that a recirculation volumetric flow is set up substantially without delay, so that until the reducing member is activated already a considerable quantity of fresh air is able to enter the fuel tank.

Particularly preferably, it is provided that the valve body is provided with at least one through-hole which in the first position of the valve body permits a minimum flow capacity of the recirculation line.

In an expedient variant of the fuel tank according to the invention, at least one non-return valve is provided in the recirculation line, downstream of the reducing member in the direction of the recirculation flow, and which in the event of fuel rising in the filler pipe prevents fuel from entering the recirculation line.

For example, a non-return flap may be provided as a non-return valve which, in the event of a back-surge, bears against the through-hole of the valve body.

In an expedient variant of the fuel tank according to the invention, it is provided that the valve body is configured as a conical sealing stopper which may be displaced between end stops of a correspondingly configured sealing seat in the recirculation line.

In an advantageous variant of the fuel tank according to the invention, it is provided that means are provided in the filler pipe, downstream of a connector for the recirculation path or the outlet of a recirculation line into the filler pipe relative to the direction of flow of the fuel to be filled in, for throttling the volumetric flow of fuel, whereby at a greater refuelling speed the suction effect in the filler pipe is reduced by increased loss of pressure.

Alternatively, a widening/enlargement of the cross section of the filler pipe may be provided for throttling the volumetric flow of fuel. The degree of throttling is selected, in this case, so that the maximum refuelling volumetric flow discharged by the dispensing nozzle is ensured without backing-up in the filler pipe, so that this does not result in the dispensing nozzle being prematurely switched off. To this end, it is advantageous that the measures/means for throttling the volumetric flow of fuel in the filler pipe are provided as far as possible in the region in which the filler pipe opens into the free volume of the fuel tank.

In one advantageous embodiment of the fuel tank according to the invention, it is provided that at least one diaphragm or a screen or the like is provided as means for throttling the volumetric flow of fuel.

According to the invention, it is provided that additionally in the filler pipe in the region of the filling neck, which is located at the upper end of the filler pipe, a reduced opening cross section is provided for sealing and/or enclosing the dispensing nozzle inserted into the filling neck, which forms a flow barrier for fresh air possibly entering the fuel tank.

Preferably, a diaphragm or a screen or the like is provided as means for throttling the volumetric flow of fuel in the filler pipe. In this variant, which may be implemented particularly cost-effectively, a reducing member in the recirculation path or in the recirculation line may be dispensed with. An optimal loading rate of the fuel vapour filter may be achieved by a recirculation volumetric flow being set by the cross-sectional reduction in the filler pipe, and which corresponds to a refuelling speed of 15 l/min, which approximately corresponds to the minimum refuelling speed and/or the minimum refuelling volumetric flow.

Instead of a cross-sectional reduction in the filler pipe, naturally a cross-sectional widening may also be provided relative to the initial cross section.

The solutions provided according to the invention, in particular, take into account the requirement for reducing the number of components which are potentially subject to malfunction.

The invention is described hereinafter with reference to two exemplary embodiments shown in the drawings, in which:
- Figure 1: shows a fuel tank according to a first exemplary embodiment of the invention,
- Figures 2 and 2: show a view of the reducing member in a first and in a second position,
- Figures 4 and 5: show a second variant of the reducing member in each case in a first and second position and
- Figure 6: shows a second exemplary embodiment of the fuel tank according to the invention.

The fuel tank 1 according to the invention is shown in a considerably simplified manner in the drawings. In particular, the contour of the tank volume is shown in a simplified manner. Required functional components and fittings of the fuel tank 1 have been omitted for reasons of simplicity.

The fuel tank 1 comprises a venting line 2, a refuelling venting valve 3 as well as operational venting valves 4. Both the refuelling venting valve 3 and the operational venting valves 4 are connected to the venting line 2, which opens into a fuel vapour filter 5. The fuel vapour filter 5 is configured as an activated charcoal filter known per se and comprising one or more chambers filled with activated charcoal as adsorbents.

The fuel tank 1 further comprises a filler pipe 6 connected at floor level to a filling neck 7 shown in a simplified manner for receiving a dispensing nozzle, not shown.

The fuel tank 1 according to the invention may, for example, consist of thermoplastic material based on HDPE. Said fuel tank may, for example, have been produced by extrusion blow-moulding, injection-moulding, thermoforming/deep-drawing or similar methods. In principle, however, the invention is not limited to the use of plastics fuel tanks, but the fuel tank 1 according to the invention could also consist of metal.

As already mentioned above, the end of the filler pipe 6 on the filling side comprises a filling neck 7 which is not shown in detail in the drawings. The filling neck 7 generally comprises a narrowed cross-sectional region which encloses the dispensing nozzle during refuelling in a manner which is more or less sealed. Such a narrowed cross-sectional region for enclosing the dispensing nozzle is not imperative and not necessarily provided. In this region the filling neck 7 is generally provided with a metal insert with a so-called lead-free flap. The metal insert serves for guiding and receiving the dispensing nozzle.

Below the narrowed region of the filling neck 7, a recirculation line 8 is attached to the filler pipe 6, and which at its end remote from the filler pipe 6, is connected to the venting line 2, and namely upstream of the fuel vapour filter 5 in the direction of flow.

The operational venting valves 4 permit in all operational states of the motor vehicle a discharge of the fuel vapours present in the fuel tank 1 via the venting line 2 and via the fuel vapour filter 5. The fuel vapour filter 5 is generally filled/packed with activated charcoal as adsorbents. As already mentioned above, the fuel vapour filter 5 has a limited adsorption capacity, which is dependent on the size of the adsorption volume thereof.

During the refuelling of the motor vehicle, the fuel vapour filter is bypassed by the recirculation line 8 in such a manner that, by means of the propellant jet effect/suction jet effect/Venturi effect, a vacuum is produced in the recirculation line 8 during the refuelling of the fuel flowing into the filler pipe such that at least a portion of the gas volume displaced therein during the refuelling/filling up of the fuel tank 1, is recirculated into the filler pipe 6 via the recirculation line 8, with the result that in the ideal case fresh air is completely prevented from flowing into the volume of the fuel tank 1 so that the recirculation volumetric flow corresponds to the refuelling volumetric flow.

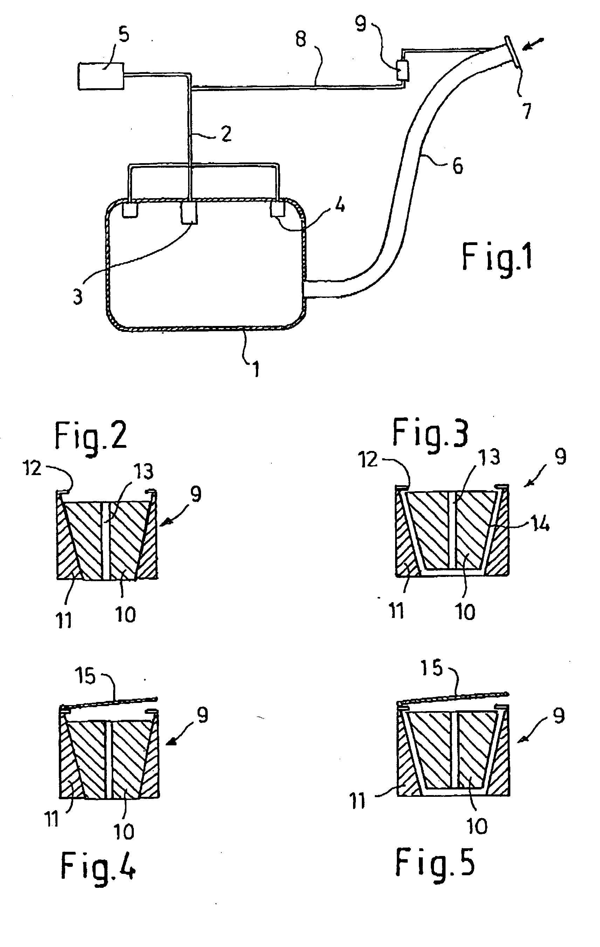

In order to ensure that such an equilibrium is present in all possible refuelling volumetric flows, and the refuelling volumetric flows may vary from approximately 15 l/min up to approximately 40 l/min, in the variant of the fuel tank 1 shown in Figure 1, in the recirculation line 8 a reducing member 9 is provided which is configured as a conical stopper/valve body 10, the cross section thereof being configured to be not substantially larger than the cross section of the recirculation line 8. The valve body 10 is able to be displaced freely movably in a valve seat 11 of approximately corresponding conicity and namely between two end positions which are predetermined, on the one hand, by the conicity of the valve seat 11 and, on the other hand, by a stop 12.

The valve body 10 is, moreover, provided with a through-hole 13 which defines the minimum cross section of the recirculation line 8 in the first position of the valve body 10 shown in Figure 2. In this position, the valve body 10 bears against the valve seat 11. The valve body 10 adopts this position, for example, with a refuelling volumetric flow of approximately 15 l/min. With an increased refuelling volumetric flow, due to the increased suction action of the fuel flowing in and a resulting increased vacuum in the recirculation line 8, the valve body 10 may adopt the position shown in Figure 3, in which the valve body 10 is raised from the valve seat 11 and opens up a conical annular gap 14 as an additional throughflow volume for fuel vapours.

In the variant of the reducing member 9 shown in Figures 4 and 5, on the outflow side of the valve body 10 a non-return flap 15 is additionally provided and which in cross section fully closes the recirculation line 8 when the fuel level in the filler pipe 6 rises sufficiently for liquid fuel to be able to enter the recirculation line 8.

Alternatively and/or additionally, a siphon may be provided in the recirculation line 8, said siphon also preventing liquid hydrocarbons from overflowing into the fuel vapour filter.

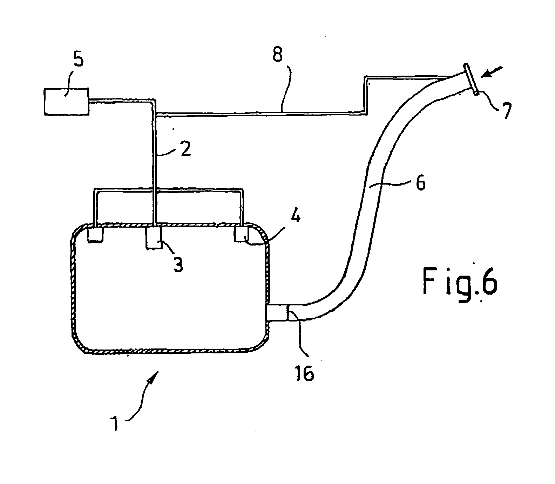

In Figure 6 an alternative variant of the fuel tank according to the invention is shown. Here, instead of the reducing member a diaphragm 16 is provided in the cross section of the filler pipe 6, and namely in the direction of the fuel flowing in, downstream of the outlet of the recirculation line 8 to the filler pipe 6. By means of the diaphragm, increased pressure losses in the filler pipe 6 are produced during refuelling so that in this manner a recirculation volumetric flow is set up in which, even at a higher refuelling speed, a greater quantity of fresh air does not enter the filler pipe 6.

### List of reference numerals

- 1: Fuel tank
- 2: Venting line
- 3: Refuelling venting valve
- 4: Operational venting valve
- 5: Fuel vapour filter
- 6: Filler pipe
- 7: Filling neck
- 8: Recirculation line
- 9: Reducing member
- 10: Valve body
- 11: Valve seat
- 12: Stop
- 13: Through-hole
- 14: Annular gap
- 15: Non-return flap
- 16: Diaphragm

## Claims

1. Fuel tank (1) for motor vehicles comprising a venting line (2) which communicates with the atmosphere via at least one fuel vapour filter (5), comprising at least one filler pipe (6) and comprising at least one recirculation path for recirculating fuel vapours during refuelling, via which the venting line (2) is connected to the filler pipe (6) upstream of the fuel vapour filter (5) in the direction of flow, at least one reducing member (9) being provided in the recirculation path for altering the flow cross section depending on the refuelling volumetric flow, **characterized in that** the reducing member (9) is configured as a valve body (10) which is freely movable in the recirculation path and which is movable without actuating elements between at least one first position with a reduced cross section of the recirculation path and a second position with an enlarged cross section of the recirculation path.

2. Fuel tank according to Claim 1, **characterized in that** the valve body (10) is provided with at least one through-hole (13) which in the first position of the valve body (10) permits a minimum flow capacity of the recirculation path.

3. Fuel tank according to Claim 1 or 2, **characterized in that** at least one non-return valve is provided in the recirculation path, downstream of the reducing member (9) in the direction of the recirculation flow.

4. Fuel tank according to Claim 3, **characterized in that** a non-return flap (15) is provided as a non-return valve.

5. Fuel tank according to Claim 4, **characterized in that** a non-return flap (15) is provided as a non-return valve which, in the event of a back-surge, bears against the through-hole (13) of the valve body (10).

6. Fuel tank according to one of Claims 1 to 5, **characterized in that** the valve body (10) is configured as a conical sealing stopper which may be displaced between end stops of a correspondingly configured sealing seat in a recirculation line.

7. Fuel tank according to one of Claims 1 to 6, **characterized in that** means are provided in the filler pipe (6), downstream of the outlet of a recirculation line (8) into the filler pipe (6) relative to the direction of flow of the fuel to be filled in, for throttling the volumetric flow of fuel.

8. Fuel tank according to Claim 7, **characterized in that** at least one diaphragm (16) or a screen or the like is provided as means for throttling the volumetric flow of fuel.

9. Fuel tank according to Claim 7, **characterized in that** at least one cross-sectional widening of the filler pipe (6) is provided as means for throttling the volumetric flow of fuel.

10. Fuel tank for motor vehicles comprising at least one venting line (2) which communicates with the atmosphere via at least one fuel vapour filter (5), comprising at least one filler pipe (6) and comprising at least one recirculation path for recirculating fuel vapours during refuelling, via which the venting line (2) is connected to the filler pipe (6) upstream of the fuel vapour filter (5) in the direction of flow, **characterized in that** means are provided, downstream of the outlet of the recirculation path into the filler pipe (6) relative to the direction of flow of the fuel to be filled in, for throttling the volumetric flow of fuel.

11. Fuel tank according to Claim 10, **characterized in that** a diaphragm (16) or a screen is provided as means for throttling the volumetric flow of fuel.

## Patentansprüche

1. Kraftstoffbehälter (1) für Kfz mit einer Entlüftungsleitung (2), die über wenigstens ein Kraftstoffdampffilter (5) mit der Atmosphäre kommuniziert, mit wenigstens einem Einfüllrohr (6) und mit wenigstens einem Rezirkulationspfad zur Rezirkulation von Kraftstoffdämpfen bei der Betankung, über welche die Entlüftungsleitung (2) in Strömungsrichtung vor dem Kraftstoffdampffilter (5) an das Einfüllrohr (6) angeschlossen ist, wobei in dem Rezirkulationspfad wenigstens ein Reduzierglied (9) zur Veränderung des Strömungsquerschnitts in Abhängigkeit des Betankungsvolumenstroms vorgesehen ist, **dadurch gekennzeichnet, dass** das Reduzierglied (9) als in dem Rezirkulationspfad frei beweglicher Ventilkörper (10) ausgebildet ist, welcher zwischen wenigstens einer ersten Stellung mit reduziertem Querschnitt des Rezirkulationspfades und einer zweiten Stellung mit vergrößertem Querschnitt des Rezirkulationspfades ohne Betätigungselemente bewegbar ist.

2. Kraftstoffbehälter nach Anspruch 1, **dadurch gekennzeichnet, dass** der Ventilkörper (10) mit wenigstens einem Durchbruch (13) versehen ist, der in der ersten Stellung des Ventilkörpers (10) eine Mindestdurchströmbarkeit des Rezirkulationspfades zulässt.

3. Kraftstoffbehälter nach Anspruch 1 oder 2, **dadurch gekennzeichnet, dass** in dem Rezirkulationspfad in Richtung der Rezirkulationsströmung hinter dem Reduzierglied (9) wenigstens ein Rückschlagventil vorgesehen ist.

4. Kraftstoffbehälter nach Anspruch 3, **dadurch gekennzeichnet, dass** als Rückschlagventil eine Rückschlagklappe (15) vorgesehen ist.

5. Kraftstoffbehälter nach Anspruch 4, **dadurch gekennzeichnet, dass** als Rückschlagventil eine Rückschlagklappe (15) vorgesehen ist, die bei Rückschlag gegen den Durchbruch (13) des Ventilkörpers (10) anliegt.

6. Kraftstoffbehälter nach einem der Ansprüche 1 bis 5, **dadurch gekennzeichnet, dass** der Ventilkörper (10) als konischer Verschlussstopfen ausgebildet ist, welcher zwischen Endanschlägen eines entsprechend ausgebildeten Dichtsitzes in einer Rezirkulationsleitung verlagerbar ist.

7. Kraftstoffbehälter nach einem der Ansprüche 1 bis 6, **dadurch gekennzeichnet, dass** im Einfüllrohr (6) bezogen auf die Strömungsrichtung des einzufüllenden Kraftstoffs stromabwärts der Mündung einer Rezirkulationsleitung (8) in das Einfüllrohr (6) Mittel zur Drosselung des Kraftstoffvolumenstroms vorgesehen sind.

8. Kraftstoffbehälter nach Anspruch 7, **dadurch gekennzeichnet, dass** als Mittel zur Drosselung des Kraftstoffvolumenstroms wenigstens eine Blende (16) oder ein Sieb oder dergleichen vorgesehen ist.

9. Kraftstoffbehälter nach Anspruch 7, **dadurch gekennzeichnet, dass** als Mittel zur Drosselung des Kraftstoffvolumenstroms wenigstens eine Querschnittserweiterung des Einfüllrohres (6) vorgesehen ist.

10. Kraftstoffbehälter für Kfz mit wenigstens einer Entlüftungsleitung (2), die über wenigstens ein Kraftstoffdampffilter (5) mit der Atmosphäre kommuniziert, mit wenigstens einem Einfüllrohr (6) und mit wenigstens einem Rezirkulationspfad zur Rezirkulation von Kraftstoffdämpfen bei der Betankung, über welche die Entlüftungsleitungen (2) in Strömungsrichtung vor dem Kraftstoffdampffilter (5) an das Einfüllrohr (6) angeschlossen ist, **dadurch gekennzeichnet, dass** bezogen auf die Strömungsrichtung des einzufüllenden Kraftstoffs stromabwärts der Mündung des Rezirkulationspfades in das Einfüllrohr (6) Mittel zur Drosselung des Kraftstoffvolumenstroms vorgesehen sind.

11. Kraftstoffbehälter nach Anspruch 10, **dadurch gekennzeichnet, dass** als Mittel zur Drosselung des Kraftstoffvolumenstroms eine Blende (16) oder ein Sieb vorgesehen sind.

## Revendications

1. Réservoir de carburant (1) pour véhicules à moteur comprenant une conduite de ventilation (2) qui communique avec l'atmosphère via au moins un filtre à vapeur de carburant (5), comprenant au moins un tuyau de remplissage (6) et comprenant au moins une trajectoire de recirculation pour faire recirculer les vapeurs de carburant pendant le réapprovisionnement, grâce à laquelle la conduite de ventilation (2) est raccordée au tuyau de remplissage (6) en amont du filtre à vapeur de carburant (5) dans la direction d'écoulement, au moins élément de réduction (9) étant prévu dans la trajectoire de recirculation pour modifier la section transversale d'écoulement en fonction de l'écoulement volumétrique de réapprovisionnement, **caractérisé en ce que** l'élément de réduction (9) est configuré comme un corps de soupape (10) qui est librement mobile dans la trajectoire de recirculation et qui est mobile sans actionner d'éléments entre au moins une première position avec une section transversale réduite de la trajectoire de recirculation et une seconde position avec une section transversale agrandie de la trajectoire de recirculation.

2. Réservoir de carburant selon la revendication 1, **caractérisé en ce que** le corps de soupape (10) est prévu avec au moins un trou débouchant (13) qui, dans la première position du corps de soupape (10), permet une capacité d'écoulement minimum de la trajectoire de recirculation.

3. Réservoir de carburant selon la revendication 1 ou 2, **caractérisé en ce qu'**au moins une soupape de non-retour est prévue dans la trajectoire de recirculation, en aval de l'élément de réduction (9) dans la direction de l'écoulement de recirculation.

4. Réservoir de carburant selon la revendication 3, **caractérisé en ce qu'**un clapet de non-retour (15) est prévu sous la forme d'une soupape de non-retour.

5. Réservoir de carburant selon la revendication 4, **caractérisé en ce qu'**un clapet de non-retour (15) est prévu sous la forme d'une soupape de non-retour qui, en cas de refoulement, s'appuie contre le trou débouchant (13) du corps de soupape (10).

6. Réservoir de carburant selon l'une des revendications 1 à 5, **caractérisé en ce que** le corps de soupape (10) est configuré avec une butée d'étanchéité conique qui peut être déplacée entre des butées d'extrémité d'un siège d'étanchéité configuré de manière correspondante dans une conduite de recirculation.

7. Réservoir de carburant selon l'une des revendications 1 à ,6, **caractérisé en ce que** l'on prévoit des moyens dans le tuyau de remplissage (6) en aval de la sortie d'une conduite de recirculation (8) dans le tuyau de remplissage (6) par rapport à la direction d'écoulement du carburant à déverser, pour étrangler l'écoulement volumétrique du carburant.

8. Réservoir de carburant selon la revendication 7, **caractérisé en ce qu'**au moins un diaphragme (16) ou un tamis ou similaire est prévu en tant que moyens pour étrangler l'écoulement volumétrique du carburant.

9. Réservoir de carburant selon la revendication 7, **caractérisé en ce qu'**au moins un élargissement transversal du tuyau de remplissage (6) est prévu en tant que moyens pour étrangler l'écoulement volumétrique du carburant.

10. Réservoir de carburant pour véhicule à moteur comprenant au moins une conduite de ventilation (2) qui communique avec l'atmosphère via au moins un filtre à vapeur de carburant (5), comprenant au moins un tuyau de remplissage (6) et comprenant au moins une trajectoire de recirculation pour faire recirculer les vapeurs de carburant pendant le réapprovisionnement, par lequel la conduite de ventilation (2) est raccordée au tuyau de remplissage (6) en amont du filtre à vapeur de carburant (5) dans la direction d'écoulement, **caractérisé en ce que** des moyens sont prévus, en aval de la sortie de la trajectoire de recirculation dans le tuyau de remplissage (6) par rapport à la direction d'écoulement du carburant à déverser, pour étrangler l'écoulement volumétrique du carburant.

11. Réservoir de carburant selon la revendication 10, **caractérisé en ce qu'**un diaphragme (16) ou un tamis est prévu en tant que moyens pour étrangler l'écoulement volumétrique du carburant.
